# EUROPEAN PATENT APPLICATION

(11) **EP 2 642 744 A1**
(43) Date of publication of application: **25.09.2013**
(21) Application number: 12160072.0
(22) Date of filing: 19.03.2012
(51) Int. Cl.: H04N 1/44, H04N 21/2347, H04N 7/26

(54) **Method and system for scrambling and descrambling a digital image**

(71) Applicant: Nagravision S.A., 1033 Cheseaux-sur-Lausanne (CH)
(72) Inventor: Sarda, Pierre, 1040 Echallens (CH); Tran, Minh Son, 92340 Bourg la Reine (FR); Dagaeff, Thierry, 1148 L'Isle (CH)
(74) Representative: Leman Consulting S.A.

(57) **Abstract**

Method for scrambling an original digital image (10) into a scrambled image (20) and for descrambling the scrambled image (20) into a reconstructed image (30), the method comprising:
a scrambling operation comprising the steps of:
- receiving the original image (10) having a coding format, this image being divided into successive blocks (11) and being stored in said coding format as a set of syntax elements (12, 13),
- substituting a plurality of syntax elements (12) by replacement syntax elements (12') of the same nature so as to keep the coding format,
- storing the value of the substituted syntax elements (12) with their respective positions within the image (10) as original data (15), into at least two control objects (CO1, CO2), each control object corresponding to a specific degradation level of the original image (10);
a descrambling operation comprising the steps of:
- receiving the scrambled image (20) and said control objects (CO1, CO2),
- selecting at least one of the control objects (CO1, CO2) based on a user access condition (25),
- using said original data (15), stored in the selected control object/objects (CO1, CO2), for obtaining the reconstructed image (30) by retrieving the respective original values of each substituted syntax element (12', 12'') identified by its position.

## Description

The present invention relates to the field of the protection of digital images, i.e. of images under electronic format, which can be processed, broadcasted or stored, for instance individually or within a video stream. In this context, this invention refers to a method for scrambling an original digital image into a scrambled image and for descrambling the scrambled image into a reconstructed image, taking into account that the reconstructed image can be different from the original image. The invention also relates to a scrambling system and a descrambling system for performing respectively the scrambling and descrambling operations. Images processed by the present invention refer to raster graphics images (or bitmap images) of any formats (e.g. GIF, JPEG, TIFF, etc...). In particular, these images are images compressed by any known process which reduces the required memory space in view of their storage while keeping the possibility to recover the original image, owing to a reverse process. The compression may be lossy or lossless and the choice of the image compression/decompression process does not depend from the invention.

### BACKGROUND

Against malicious purposes and for many other reasons, there is a need to secure the access to electronically stored images or photos (i.e. the information conveyed in images / photos) in particular when their physical storages are exposed to hackers or any other malicious person. This happens for example when a storing electronic server is hacked and when the physical storage of images is susceptible to be disclosed or when an image is not protected against copying processes. Each of these situations can cause problems either to the initial owner of the image or to its hoster.

For instance, when pictures are posted on internet sites, blogs or social networks (e.g. Facebook, Twitter, etc...), according to the policy of the web hoster or the web space provider, the rights on this picture (i.e. copyrights attached to the picture) are generally automatically lost and transferred to the hoster, while the legitimate owner may prefer to keep a full control on its own asset.

A known technique aiming to prevent or deter unauthorized copying of digital images and thereby preserve the copyrights of these images is the digital watermarking process. Watermarking is the process of embedding information into a digital signal which may be used to verify its authenticity or the identity of its owners, similarly as paper bearing a watermark for visible identification. If the signal is copied, then information relating to the watermark is also carried in the copy. There are generally two classes of digital watermarks: the visible watermarks and the invisible watermarks. However, none of these classes is appropriate for the purpose of the present inventions given that watermarking seeks to add information (either visible or invisible) to the digital image but this process does not seek to scramble this image.

Therefore, there is a need to provide another technical solution for controlling access to such digital pictures/images.

### SUMMARY OF THE INVENTION

In order to solve the above-mentioned problems, the present invention aims to suggest a new method for scrambling/descrambling digital images in view to increase their protection, for instance depending on their usage. The invention allows getting variable scrambling effects by defining several levels of luring, each providing a specific visual degradation accordingly.

This aim is reached by a method for scrambling an original digital image into a scrambled image and for descrambling the scrambled image into a reconstructed image. To this end, this method comprises a scrambling operation and a descrambling operation as below:
The scrambling operation comprises the following steps:
   - receiving the original image having a coding format, as received said image being composed of syntax elements SEs, each syntax element having a precise role into the bitstream structure and being identified by a position within the original image; in the non limitative case where the coding format is JPEG compression, such syntax elements can be DC coefficient and AC coefficients or elements of a quantization matrix;
   - substituting a plurality of syntax elements by luring syntax elements of the same nature so as to keep the coding format,
   - storing the values of the substituted syntax elements with their respective positions within the image as original data into at least two control objects COs, each control object corresponding to a specific degradation level of the original image;

The descrambling operation of the method comprises the steps of:
- receiving the scrambled image and the control objects COs,
- selecting at least one of the control objects based on a user access condition,
- using the original data, stored in the selected control object/objects, for obtaining the reconstructed image by retrieving the respective original values of each substituted syntax element identified by its position.

The user access condition defines the rights of the user for descrambling the scrambled image into a reconstructed image. Depending on the user access condition, the reconstructed image can be a partially descrambled image or a fully descrambled image (i.e. identical to the original image). According to the present invention, the reconstructed image can be scalable into a plurality of different quality levels so that this image can still be more or less scrambled. Therefore, the reconstruction of this image can be advantageously made in an adaptive and progressive manner. To this end, the present invention allows defining the quality of the reconstructed image by means of the user access condition, in particular owing to information or parameters contained in the access condition of that user. Thus the descrambling operation of the method is performed selectively according to access criteria. In other words it is performed on demand, according to the profile of the user wanting to handle this image in view to see it, to copy it, to send it or in view of any other purpose. Such a method is useful for advertising / teasing application to stimulate / promote the curiosity for a final consumption.

The present invention also refers to a system for scrambling an original image into a scrambled image. To this end, it comprises a scrambler for scrambling an original image into a scrambled image by substituting a plurality of syntax elements by replacement syntax elements of the same nature, and forming at least two control objects; each control object corresponding to a different degradation level of the original image and comprising the substituted syntax elements with their respective positions within the image as original data; each control object being subject to different access conditions.

To perform image reconstruction, the present invention also refers to a system for descrambling a scrambled image into a reconstructed image. The scrambled image is associated with at least two control objects, each corresponding to a different reconstruction level of the scrambled image. Each control object comprises original data formed by substituted syntax elements and their respective positions. These control objects are then used to retrieve original values of the substituted syntax elements, for instance by replacing luring coefficients and/or compensated coefficients (that have been put instead of original coefficients) by the respective original values of each substituted coefficients. This descrambling system also comprises a selection unit to select at least one of the control objects according to a user access condition and a replacement unit to replace the replacement coefficients in the scrambled image by the substituted coefficients (i.e. the original coefficients) extracted from the selected control object.

### BRIEF DESCRIPTION OF THE DRAWINGS

The present invention will be better understood thanks to the attached figures in which:
Figure 1 schematically shows the transformation of an original image into a scrambled image according to the present invention;
Figure 2 schematically shows the transformation of the scrambled image of Fig. 1 into a reconstructed image according to the present invention;
Figure 3 shows, as example, four different levels of descrambling of the reconstructed image depending on user access conditions;
Figure 4 shows the scrambling operation according to one embodiment of the method of the present invention;
Figure 5 shows the descrambling operation that is made after the scrambling operation of Fig. 4 to get a reconstructed image;
Figure 6 is an illustration of a first hierarchical organization of the control objects showing the importance of their impact on the degradation of the image;
Figure 7 is an illustration of a second hierarchical organization of the control objects showing the importance of their impact on the degradation of the image;
Figure 8 shows the contents of three control objects comprising additional original data coming from a calculation of compensated coefficients;
Figure 9 is a schematic illustration showing a portion of an original block of coefficients and the corresponding portion of the same block including a compensated coefficient;
Figure 10 is a schematic representation of a descrambling system according to the present invention.

### DETAILED DESCRIPTION

Reference will now be made in detail to the preferred embodiments of the invention, examples of which are illustrated in the accompanying drawings. While the invention will be described in conjunction with the preferred embodiments, it will be understood that they are not intended to limit the invention to these embodiments. On the contrary, the invention is intended to cover alternatives, modifications and equivalents, which may be included within the spirit and scope of the invention as defined by the appended claims. Furthermore, in the following detailed description of the present invention, numerous specific details are set forth in order to provide a thorough understanding of the present invention. However, it will be obvious to one of ordinary skill in the art that the present invention may be practiced without these specific details. In other instances, well known methods, procedures, components, and circuits have not been described in detail as not to unnecessarily obscure aspects of the present invention.

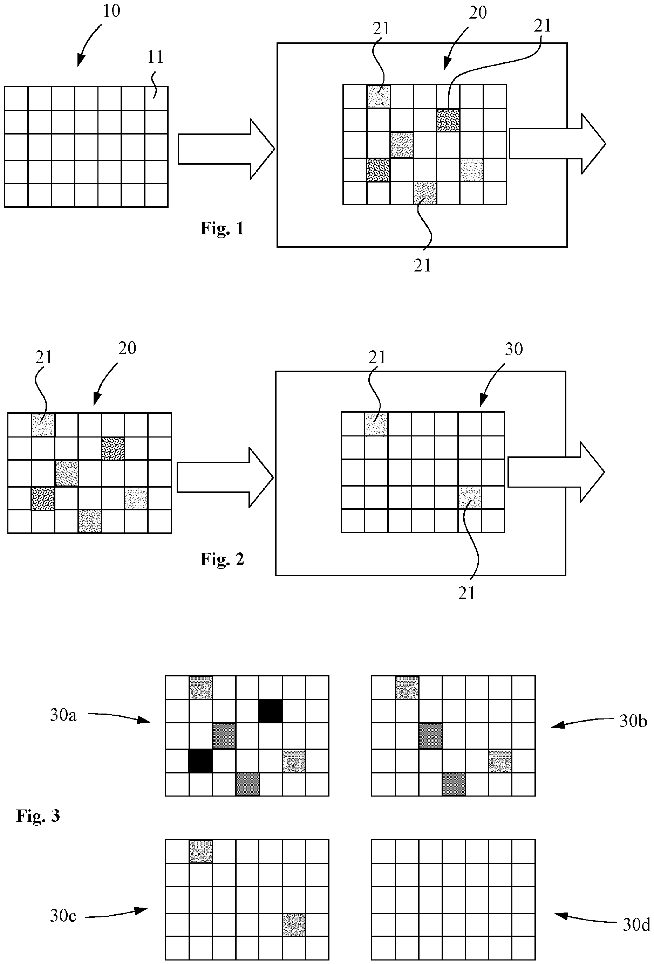

Referring to Fig. 1, it schematically illustrates the transformation of an original image 10 into a scrambled image 20. The original image 10 is a compressed image having a coding format that is recognized by common players able to process such a digital image. As schematically shown in this figure, the original image 10 is divided into successive blocks 11, each corresponding to a sub-image of the original image. The divided image is stored in a memory (of the system for scrambling the original image) in this coding format as a set of syntax elements. According to the preferred embodiment of the invention, these syntax elements are DC coefficients and AC coefficients. Each block 11 was a matrix of 8x8 pixels which has been converted during the compression process into blocks of coefficients by means of a transformation function. Such a function can be for instance a discrete cosine transform (DCT). This kind of transformation is typically used by JPEG and MPEG standards and is therefore well known by the person skilled in the art. Each block of 64 coefficients can be then further quantized with the help of a quantization matrix of size 8x8. Although the following description refers to blocks of coefficients, in particular to DC and AC coefficients taken as preferred components, it should be understood that other coefficients or parameters, such as the elements of the quantization matrix, could be also taken into consideration instead of said coefficients DC, AC.

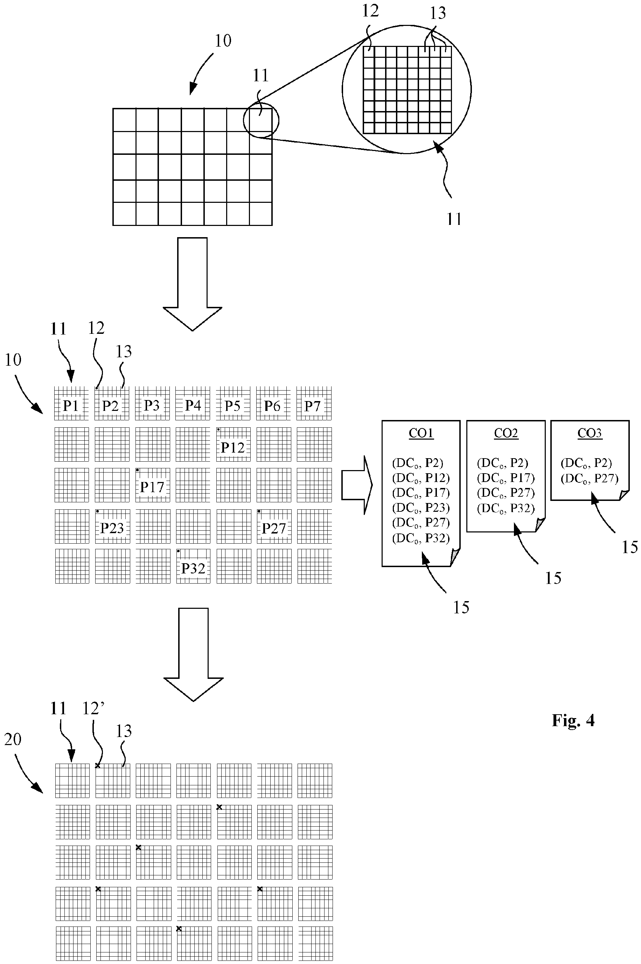

As shown in Fig. 1, the original image is transformed into a scrambled image 20. This image 20 is defined as scrambling image given that it comprises a plurality of blocks 21 which have been scrambled. According to the invention, the scrambled image 20 is a scalable image comprising several levels of degradation shown in this Figure by the different grey levels of the scrambled blocks 21. Further explanations will be given with reference of Fig. 4 about the scrambling operation.

Figure 2 shows the transformation of the scrambled image 20 of Fig. 1 into a reconstructed image 30 according to the descrambling operation of the method suggested by the present invention. As shown in this figure, the reconstructed image 30 can be different from the original image 10 given that the reconstructed image can still comprises some scrambled block 21. Depending on an access condition assigned to a user wanting to descramble the scrambled image 20, the reconstructed image 30 can be still partially scrambled (i.e. several scrambled blocks remain intact) or can be fully reconstructed so as to be identical as the original image 10.

Figure 3 shows, as example, four different descrambling levels of the reconstructed image, each level representing a different user access condition. These levels of degradation are schematically represented by blocks of different grey levels. By comparing the scrambled image 20 of Fig. 1 or Fig. 2, the reconstructed image 30a remains scrambled since no block 21 has been descrambled in the reconstructed image. This case may typically correspond to a denied access to get a reconstructed image for a certain user. The reconstructed image 30b corresponds to a poor access given that this image remains rather scrambled. The image 30c is rather a good reconstructed image corresponding to a better quality given that the remaining degradation level is quite low. It corresponds to a user access condition of a better level. The last reconstructed image 30d is a fully reconstructed image corresponding to the original image 10 since all the scrambled blocks 21 have disappeared. As illustrated in Fig. 3, one of the aims of the present invention is to provide a method wherein the reconstructed image can be provided with different degradation levels.

Referring to Fig. 4, the scrambling operation is now explained in more detail in the case of JPEG encoding format according to a preferred embodiment of the method of the present invention. Overall, the scrambling operation aims to substitute original data by other data which are denoted luring data or fake data. Each block 11 of the original image is made of a matrix of DC and AC coefficients, in particular one DC coefficient 12 and a plurality of AC coefficients 13. The DC coefficient (Direct Coefficient) is the first coefficient of the block on the top left of the matrix, i.e. at the position (0,0) marked by a small black spot in Fig. 4. The DC coefficients 12 of all blocks 11 are encoded in the differential manner according to the JPEG standard. Therefore, the blocks 11 are dependent on each other. This dependency can affect the whole image, or groups of successive blocks separated by a special syntax element in the encoded image, namely a Restart Marker. Restart Markers act as separator, the very first DC coefficient following a Restart Marker being encoded independently, the successive DC ones being again encoded differently until the occurrence of the next Restart Marker, or the end of image.

The DC coefficient 12 represents an average intensity of its block and therefore refers to an average of the quantity of the matrix of the coefficients. The AC coefficients are the remaining elements of the matrix. From the top left to the bottom right, the AC coefficients represent respectively the low to high frequency factors in the 2-dimensional space.

According to one embodiment of the present invention, several blocks of original image 10 (marked as P1... P7, P12, P17, P23, P27 and P32 in Fig. 4) will be scrambled.

Yet according to another embodiment, the image 10 represents a rectangular portion or zone of a complete image, and contains a plurality of blocks spread over several rows of blocks. A zone is not limited to rectangular form and can have an arbitrary shape, defined by a selection of a different number of blocks on successive rows in the image. In this case, each zone is represented by the smallest numbers of blocks that cover the entire surface delimited by the zone. A selection of several zones inside the same image is also possible.

According to a preferred embodiment of the invention, the structure of the original image 10 and original DC coefficients 12 extracted from the aforementioned blocks are shown in Fig. 4. The original DC coefficients 12 in the targeted blocks located at positions P2, P12, P17, P23, P27 and P32 are replaced with luring coefficients 12'. The value of the luring coefficient 12' can be generated, for example, according to a random process. The values of original DC coefficients 12 and the locations of their blocks (i.e. positions P2, P12,... within the image 10) are saved in the original data 15 in a form of 2-tuple data. For instance, the 2-tuple data (DC₀, P2) in Fig.4 refers to the original value of the DC coefficient of the block 11 located at position P2. All the 2-tuple data of the original data 15 are arranged into a plurality of control objects CO1, CO2, CO3, which are independently incorporated into the descrambling process later on to reconstruct the image with different level of degradation. Each time a block of coefficients is lured by at least one luring coefficient 12', original data 15, namely the original coefficient 12 which has been substituted by the luring coefficient 12', must be stored (i.e. saved) in view of a reverse process aiming to recover at least a partially descrambled image.

According to the present method, the first step of the scrambling operation is to receive the original image 10 structured according to a predefined coding format so as to be readable by common players. Preferably, this coding format refers to a differential coding so that a current DC coefficient of a certain block can be determined e.g. by subtracting the value of the non-encoded previous DC coefficient to the value of non-encoded current DC coefficient.

Then, the second step refers to the substitution of a plurality of DC coefficients 12 by luring coefficients 12' of the same nature so as to maintain this coding format. It means that, on the one hand, there is no intention to mix the blocks (or the pixels) within the image but the scrambling effect is obtained by altering certain blocks 11 (in particular by substituting original DC coefficients with luring coefficients 12' to get lured coefficients) while retaining their position within the image, and on the other hand that luring coefficients are conform to the syntax of the image format (syntax of the used codec) so as to be readable by common players. The substituted DC coefficients 12 (i.e. lured DC coefficients) are identified by positions P2, P12, P17, P23, P27 and P32 in the example of Fig. 4.

As shown in the middle of Fig. 4 referring to the third step of scrambling operation, each of these substituted DC coefficients 12 (i.e. the values of these coefficients), together with their respective position within the image, is stored as original data 15 into at least two control object CO1, CO2. In the example of Fig. 4, three control objects CO1, CO2, CO3 are used for storing the original data 15, each 2-tuple data formed by the original value of the DC coefficient 12 and its position P. According to the embodiment disclosed in this figure, the first control object CO1 comprises all of the original data 15, namely the six original DC coefficients 12 (also denoted DCo) and their position P. The second control object CO2 only comprises a subset of original data 15 of the first control object CO1, namely the values DCo of the original DC coefficients 12 located at positions P2, P17, P27, P32. The last control object CO3 also comprises a subset of the original data 15 present in one of the previous control objects CO1, CO2, in particular original DC coefficients 12 of positions P2 and P27.

Each control objects CO1, CO2, CO3 corresponds to a degradation level of the original image 10 since the first control object CO1 comprises all the required original data 15 to recover the original image, whereas each of the other control objects CO2, CO3 only comprises a specific part of all the original data. The degradation level of the third control object CO3 is therefore higher than the degradation levels of the two other control objects CO1 and CO2.

According to another embodiment of the invention in which the syntax elements SEs of blocks 11 are made of quantizers instead of DC/AC coefficients, the substitution is applied to the quantizers in the quantification table. Because the quantification table is a global parameter of the JPEG format, modifying its quantizers affects all blocks of the compressed image. Therefore the 2-tuple data in the original data 15 no longer contain the position of the affected block. Instead, they consist of the original quantizer and its index-location in the quantization table. For instance, a possible original data 15 can be (Q₁, I), which refers to an original value Q of a quantizer at the location I (I ∈ [0...63]) of the quantization table. A control object CO_{N} containing only the quantizer at the lower location I (scaler of low frequency coefficients) produces more degradation than those having the quantizer at higher location I (corresponding to high frequency coefficients).

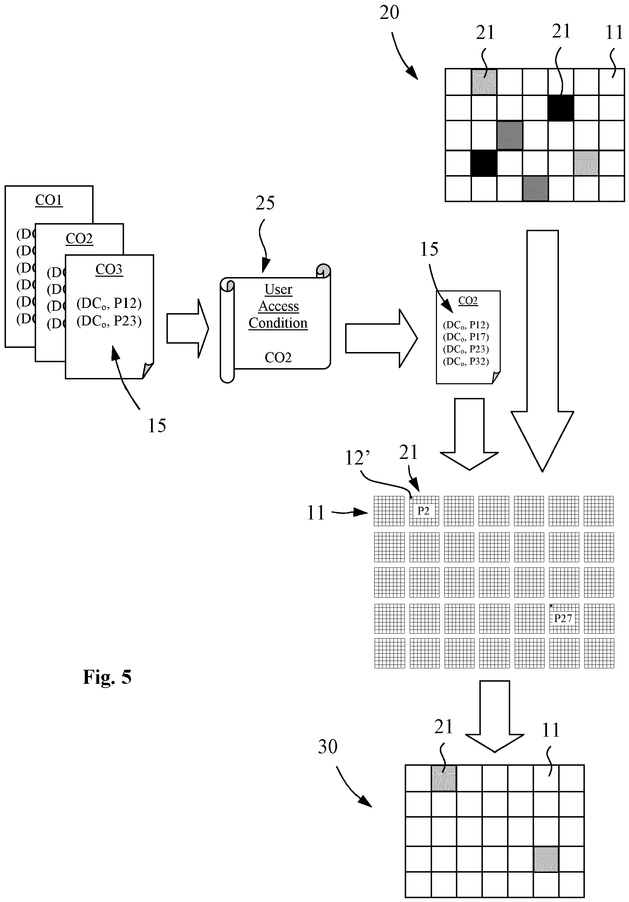

The descrambling operation made, as a pseudo-reverse operation, after the above scrambling operation is schematically shown in Figure 5. The first step of the descrambling operation is to receive the scrambled image 20 on the one hand, and the control objects CO1, CO2, CO3 on the other hand, either by the same channel or by two different channels (data streams). All the control objects are used as input for the descrambling operation. The second step refers to select at least one of these control objects on the basis of a user access condition 25. The user access condition can be regarded as a parameter that is specific for a certain user. It defines the remaining degradation level of the reconstructed image, i.e. the quality of the descrambled image after the descrambling operation. The user access condition can be provided to the descrambling operation as a specific input each time the user wants to access to a scrambled image. Alternatively, the user access condition can be stored in a memory of the device which performs the descrambling operation. Preferably, the user access condition has to be renewed periodically. According to another embodiment, the user access condition can be included within an entitlement control message that must be received periodically by the device processing the descrambling operation.

As shown as example in Fig. 5, the user access condition 25 refers to the control object CO2, namely to original data 15 corresponding to positions P12, P17, P23 and P32 of the image 10, 20. According to the embodiment illustrated in this figure, the control object CO2 (comprising the original data 15) allows to restore original DC coefficients 12 located at these four positions. Consequently, the luring coefficients 12' located at positions P2 and P27 cannot be removed given that original data of these two coefficients are not comprised in the control object CO2, but in the control object CO3 which is not designated by the user access condition 25. As a result, the reconstructed image 30 still comprises two lured blocks of coefficients, as shown in Fig. 5. Therefore, the descrambling image 30 is not the same quality as the original image 10.

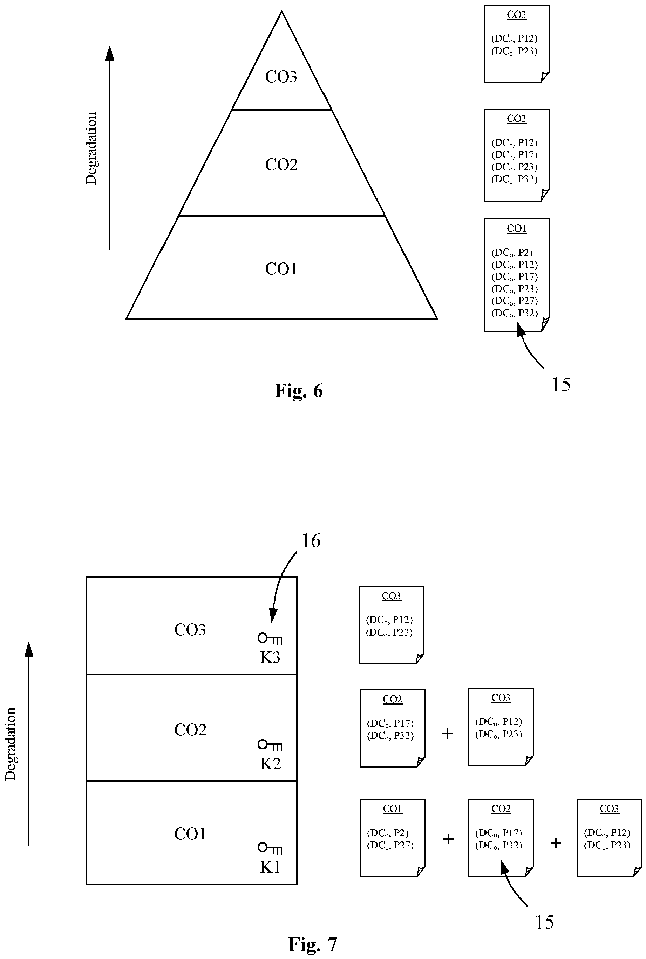

As better shown in Fig. 6, control objects CO1, CO2, CO3 are organized in a hierarchical manner where, according to a first embodiment, the control object CO1 comprises the entire original data 15 for reconstructing the image and corresponds therefore to the lowest level of degradation, more particularly to perfect/complete reconstruction (image 30d of Fig. 3). The control objects CO2 and CO3 correspond to higher level of degradation since they are formed by a subset of the original data 15 present in a control object (CO1) corresponding to a lower level of degradation. The level of degradation corresponding to control objects CO2 and CO3 is illustrated in Fig. 3 by the images 30c and 30b, respectively.

Alternatively, Fig. 7 shows another embodiment of a hierarchical organization of the control objects where each control object CO1, CO2, CO3 comprises non-overlapped original data 15. According to this embodiment, data comprised in any control object are unique and are not included in other control objects, and the selection of one of the control objects (according to the user access condition 25) automatically includes the selection of all the control objects corresponding to a higher level of degradation. This means, according to the illustration of Fig. 7, that the selection of the control object denoted CO1 automatically includes the selection of all dependent control objects, namely CO2 and CO3. Thus, the designation of the control object CO1 implies the selection of the original DC coefficients 12 located at positions P2, P27, P17, P32, P12, P23, allowing to get the best reconstructed image 30d as shown in the example of Fig. 3. Similarly, the selection of the control object CO2 automatically includes the selection of the control object corresponding to a higher level of degradation, namely the selection of the dependent control object CO3. Therefore, the selection of control object CO2 implies the selection of original DC coefficients 12 located at positions P17, P32, P12, P23, allowing to get a reconstruction image 30c provided with a low degradation level as shown in Fig. 3. Given that only three control objects are provided in this example, therefore the selection of the control object CO3 only implies the selection of the original DC coefficients included within this third control object, namely those located at position P12 and P23. The descrambled image corresponds to the reconstructed image 30b of Fig. 3. The last image 30a of Fig. 3 corresponds to the scrambled image 20 since, in this case, no control object would be allowed to the user, for instance due to a denied access. In this case, the user access condition 25 can be empty or it can comprise a default value corresponding to a denied access.

According to a preferred embodiment, the degradation level of the reconstructed image corresponds to the number of blocks, which DC and / or AC coefficients are recovered to their original values thanks to the original data 15.

According to another embodiment, the degradation level of the reconstructed image is inversely proportional to the level of image-details (carried by the transformed coefficient at high frequency), which are correctly inverse-quantized. The more quantizers at the higher frequency are recovered, the lower degradation the reconstructed image suffers from.

According to another embodiment, each control object can be secured against reading by means of an additional encryption step using a key 16, during the scrambling operation. Consequently, the descrambling operation also comprises an additional step for decrypting each encrypted control object by means of this key 16. In one embodiment, this key is unique for each control object and is identified by a key identifier K (e.g. K1, K2, K3) which corresponds to the unique identifier ID of the control object (e.g. CO1, CO2, CO3 respectively) encrypted with this key 16, as shown for instance in Fig. 7.

In another embodiment, particularly applicable to the hierarchic organization of the control objects shown in Fig. 7, the keys 16 identified by K1, K2, K3 are also organized in a hierarchic manner according to the level of degradation relating to the control objects, so that the access to one of these keys gives access to the keys corresponding to a control object of higher level of degradation. As example with reference to Fig. 7, the access to the Key identified by K1 gives access to the dependent keys identified by K2 and K3 which are required for decrypting the control objects CO2 and CO3 respectively. Similarly, the access to the key identified by K2 gives access to the dependent key identified by K3, but does not provide access to the key identified by K1 for decrypting the control object CO1 which provides a lower level of degradation.

In a further embodiment, the key 16 of a certain level of degradation is obtained by a hash function of the key related to the lower level of degradation.

In another embodiment, the encryption and decryption steps of the scrambling and descrambling operations can be performed with a key 16 according to a symmetric encryption scheme, or with a paired key 16 according to an asymmetric encryption scheme involving one public key and one private key.

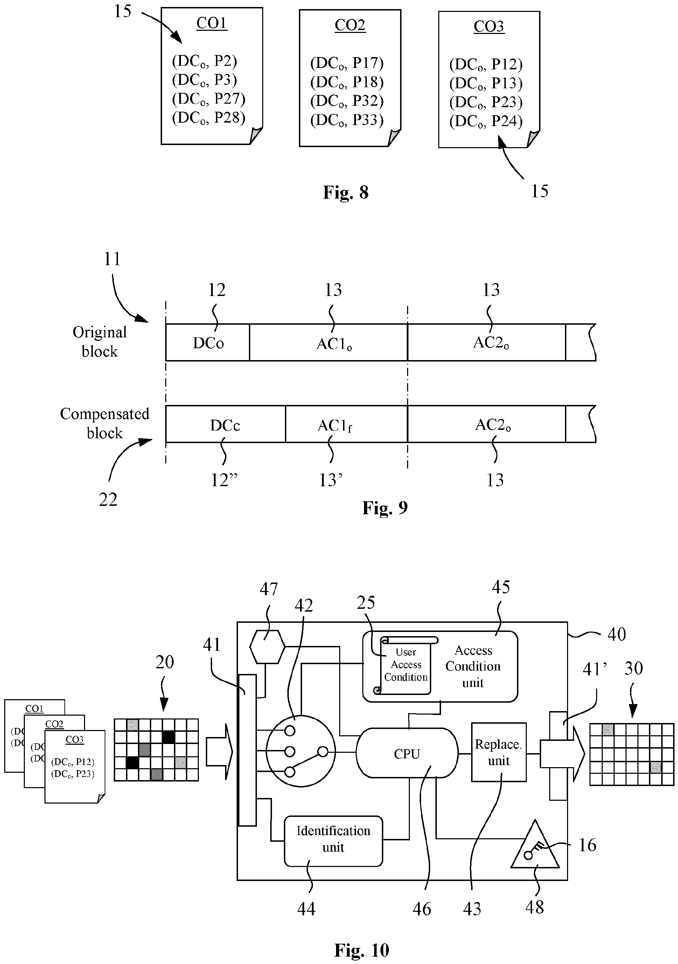

Reference is now made to Fig. 8, which shows the same control objects CO1, CO2, CO3 as above, but with additional original data coming from a calculation of compensated coefficients. Because the DC coefficients of the successive blocks are encoded differentially, the substitution of the value of an original DC coefficient by another value (i.e. by a luring DC coefficient 12') causes automatically modifications of the values of the following DC coefficients due to their dependency (correlation), until the end of the image or the next Restart Marker. In particular, the substitution of one DC coefficient 12 influences all downstream DC coefficients, namely the DC coefficients which follow the substituted DC coefficient within the image. This downstream drift effect is specific to the DC coefficients because it depends on their method of calculation which, in this case (due to the differential coding), makes each DC coefficient dependent on the first previous DC coefficient only. By taking into consideration other kinds of syntax elements or parameters (such as AC coefficients or quantification coefficients/parameters), this drift effect no longer exists because these coefficients/parameters are different and in particular are not based on differential coding.

In order to limit the spread of the image degradation caused by this drift effect (cascading effect), especially when the luring effect is applied to a portion of the image and not its entirety, the method of the present invention suggests that the scrambling operation further comprises, for each block where the drift effect has to be stopped, a step of calculating a compensated coefficient 12" (Fig. 9) for a so-called compensated block 22 which is one of the following downstream blocks. In the case of zone consisting a plurality of blocks, the calculation of the compensated coefficient 12" must be performed for the blocks immediately following the last blocks in each rows of the zone.

As shown in Fig. 8, each control object CO1, CO2, CO3 comprises compensated data by comparison to control objects of Fig. 7. Taking the first control object CO1 of Fig. 8 as a first example, original data (DCo) located at positions P2 and P27 have been each provided with compensated data (compensated coefficients), namely the original DC coefficients 12 located at positions P3 and P28; these positions being respectively located after the DC coefficients P2 and P27. Similarly, the control object CO2 of Fig. 8 comprises original DC coefficients located at positions P18 and P33 due to calculation of compensated coefficients 12" replacing the original DC coefficients at these positions. The same applies for the third control object CO3.

Once the calculation of a compensated coefficient has been made, the scrambling operation of the method also comprises steps aiming to substitute the original DC coefficient 12 of the compensated block 22 by the compensated coefficient 12", and to store this original DC coefficient 12, together with its position, as additional original data 15 into a control object.

According to one embodiment, the compensated coefficient 12" is calculated on the basis of the difference between the corresponding luring coefficient 12' and the corresponding substituted DC coefficient 12. In particular, this difference is subtracted to the original DC coefficient 12 which has been substituted by the compensated coefficient 12".

Referring now mainly to Fig. 9, this figure shows on the one hand a portion of an original block 11 of coefficients, and on the other hand the corresponding portion of the same block including a compensated coefficient 12" in accordance to variable length coding. The variable length coding (VLC) is a statistical coding technique that assigns code words to the values to be encoded. Short code words are assigned to the values of high occurrence (i.e. to the values which appear frequently in the image), and long code words to those of poor occurrence. On average, short code words are more frequent, so that the encoded string is advantageously shorter than the original data 15. In order to recover the values on the basis of the code words according to a reverse process, a conversion table is established for providing the appropriate initial value that corresponds to each code word. Such a table is usually known by the person skilled in the art under the name of Huffman table.

According to an embodiment of the present invention, the DC coefficients are coded according to a Variable Length Coding and the substitution step (within the scrambling operation) selects the length of the luring coefficient 12' as the same as the length of the substituted coefficient 12.

The VLC coding is defined as being of variable length to keep the coding format so that blocks are still fully readable by common players (e.g. to be compliant with the JPEG norm). Regarding to the calculation of compensated coefficients 12", a first option is to provide a compensated coefficient 12" (also noted DCc) having the same length (i.e. the same bits length) as the original DC coefficient 12 (also noted DCo). By substituting the original DC coefficient DCo by a compensated coefficient DCc there is no incidence in the following AC coefficients in case where the compensated coefficient DCc is the same length as the original DC coefficient DCo.

However, in case where the length of the compensated coefficient DCc is different (i.e. either shorter or longer) than the original DC coefficients DCo, this bits length difference impacts on the structure of the block by causing a shifting of the AC coefficients. To obviate this shifting, Fig. 9 shows another option focused on VLC coding. In this figure, the first coefficient of the original block 11 is an original DC coefficient 12 (DCo) which is followed by a plurality of original AC coefficients 13 (noted AC1o, AC2o, etc...). To avoid any shifting in the bitstream, the original AC coefficient AC1o located next to the DC coefficient DCo is substituted by a fake AC coefficient 13' (also noted AC1f). This fake AC coefficient 13' is chosen so that the sum of the length of the original DC coefficient DCo and the original AC coefficient AC1o is the same as the sum of the length of the compensated coefficient DCc and the fake AC coefficient AC1f taking into account that the fake AC coefficient AC1f is compatible with the coding format of the image. By this means the drift effect resulting from the luring DC coefficient 12' is stopped by the compensated coefficient 12". The fake AC coefficient 13' used to compensate the shift will add some visual effect which will be limited to their block only, preventing any additional drift effect. Thus, the compensated block 22 may still appear lured, but the next block will be decoded correctly.

If the data available through the first AC coefficient AC1o is not enough to fully compensate the drift, then some or all of the AC coefficients from the block can be used to generate the appropriate compensation.

For implementing this way of doing into the method of the present invention, the following features have to be considered. The DC coefficients are coded according to a Variable Length Coding. In case that the length of the compensated coefficient 12" is different than the length of the original DC coefficient 12 in a compensated block 22, the method comprises the steps of:
- extracting at least one AC coefficient 13 following the DC coefficient 12 to be compensate,
- determining at least one fake AC coefficient 13' so that the sum of the length of the original DC coefficient 12 and the original AC coefficient(s) 13 is the same as the sum of the length of the compensated DC coefficient 12" and the fake AC coefficient(s) 13', while taking into account that the fake AC coefficient(s) 13' is (are) compatible with the coding format of the image.

If the quantity of bits available through the first AC coefficient is not sufficient, then some or all the following AC coefficients can be used to generate the compensated DC coefficient and the fake AC coefficient(s) 13'.

Although Fig. 9 refers to a compensated block 22, the same could be applied to scrambled block 21 comprising luring coefficient 12' (instead of compensated coefficient 12"), in case where the length of the luring coefficient 12' would be different (i.e. either shorter or longer) than the original DC coefficients 12 (DCo).

According to more general considerations of the invention, each of the blocks of coefficients of the image 10 can be identified by a unique identifier. This identifier can be used for identifying the original coefficient of each block. Preferably, each original coefficient is identified by means of its position within the image, e.g. by means of the pair of original data 15 which comprises the value of the original coefficient together with its position in the image. Preferably, the determination of the coefficients that have to be substituted by luring coefficients is made randomly among all the coefficients of the original image.

The area, within the image, where luring coefficients are generated can be limited to a portion of the digital image or can be extended to the entire image. According to an embodiment, each control object is defined by an integer value which does not exceed the total number of control objects. The number of original data 15 is preferably equal in each control object of embodiments shown in Fig. 7 and 8. According to another embodiment shown in Fig. 6, the number of original data comprised in each control object is preferably distributed proportionally (for instance, ⅓ of data in CO3, 2/3 of data in CO2 and the entire of data in CO1). Preferably, the user access condition comprises the unique identifier ID of one control object to determine the control object(s) allowed for this user in view of the descrambling operation. Alternately, the user access condition may comprise a value that determines the number of control objects allowed for said user. Moreover, the number of blocks 11, 21 comprised in a digital image or the number of AC coefficients 13 per block, as shown in the attached figures, is not a restrictive choice but results from an arbitrary choice. Similarly, the number of lured coefficients is in no way limited to the number shown in the figures.

The present invention also refers to a system for scrambling an original image into a scrambled image. Such a system comprises a scrambler for scrambling an original image 10 in a scrambled image 20. The scrambling operation is obtained by substituting a plurality of syntax elements (e.g. AC and DC coefficients, or elements of a quantization matrix) by luring syntax elements (i.e. replacement syntax elements) of the same nature. At least two control objects CO1, CO2 comprise the substituted syntax elements with their respective positions within the image as original data 15. Each control object corresponds to a different degradation level of the original image 10 and is subject to a specific access condition 25. Depending on the method implemented in this system, each luring syntax elements can be also followed by a compensated syntax element which replaces an original syntax element whose value and position are also stored as additional original data 15 in one of the control objects CO1, CO2.

In order to proceed with a pseudo-reverse operation, the present invention also refers to a system 40 for descrambling a scrambled digital image 20 into a reconstructed image 30. This system 40 is schematically shown in Fig. 10. The scrambled image 20 comprises a plurality of blocks 21 which has been scrambled by substitution of their original coefficient 12 (taken in the present description of the system 40 as an example of a syntax element) by a luring coefficient, as shown in Fig. 2. The scrambled image 20 is associated with at least two control objects CO1, CO2, each corresponding to a specific reconstruction level of the scrambled image 20. Each control object comprises original data 15 formed by substituted coefficients 12, 13 and their respective positions P for replacing replacement coefficients (such as a luring coefficient 12' or a compensated coefficient 12" for an original coefficient 12, or a fake coefficient 13' for an original AC coefficient 13) of the scrambled image 20.

To this end, the system 40 comprises an input interface 41 for receiving at least the scrambled image 20 as first input and control objects as second input. The system comprises a selection unit 42 to select at least one of the control objects CO1, CO2, CO3 according to a user access condition 25 and a replacement unit 43 to replace the replacement coefficients (luring coefficients 12', compensated coefficients 12", or fake coefficients 13') of the scrambled image 20 by the substituted coefficients (original DC or AC coefficients) extracted from the selected control object. The reconstructed image 30 can be finally delivered out of this system through an output interface 41' as shown in Fig. 10.

According to one embodiment, the system 40 further comprises an identification unit 44 to identify a user wanting to access to the scrambled image 20, and an access condition unit 45 for determining the user access conditions 25. The user access condition 25 can be imported into the system 40 as third input through the input interface 41. As shown in Fig. 10, a central processing unit 46 can be used to manage all the components of the system 40 and to ensure the processing of descrambling operation of the method disclosed in the present invention.

Optionally, this system may further comprise a decryption unit 47 for decrypting control objects CO1, CO2, CO3 with an appropriate key 16 in case where these control objects have been previously encrypted. To this end, the system can also comprise a security module 48 for storing the appropriate key 16 within a secured environment or for receiving this key as another input under an encrypted message and for processing this message to extract the required key 16.

Although three control object CO1, CO2, CO3 have been used in the examples of the present detailed description, it should be understood that the present invention is not limited to three control objects. From a general point of view, at least two control objects are defined.

## Claims

1. Method for scrambling an original digital image (10) into a scrambled image (20) and for descrambling the scrambled image (20) into a reconstructed image (30), the method comprising a scrambling operation and a descrambling operation,
the scrambling operation comprising the steps of:
- receiving the original image (10) having a coding format, said image being divided into successive blocks (11) and being stored in said coding format as a set of syntax elements (12, 13),
- substituting a plurality of said syntax elements (12, 13) by luring syntax elements (12', 13') of the same nature so as to keep the coding format,
- storing the values of the substituted syntax elements (12) with their respective positions within the image (10) as original data (15), into at least two control objects (CO1, CO2), each control object corresponding to a specific degradation level of the original image (10);
the descrambling operation comprising the steps of:
- receiving the scrambled image (20) and said control objects (CO1, CO2),
- selecting at least one of the control objects (CO1, CO2) based on a user access condition (25),
- using said original data (15), stored in the selected control object/objects (CO1, CO2), for obtaining the reconstructed image (30) by retrieving the respective original values of each substituted syntax element (12, 13) identified by its position.

2. Method according to claim 1, wherein original data (15) present in the control object (CO2) corresponding to the higher level of degradation is formed by a subset of the original data (15) present in a control object (CO1) corresponding to a lower level of degradation.

3. Method according to claim 1, wherein each control object (CO1, CO2) comprises different original data (15), the selection of the control object (CO1, CO2) according to the user access condition (25) further comprises the selection of the control object/objects (CO1, CO2) corresponding to a higher level of degradation.

4. Method of any of claims 1 to 3, wherein each control object (CO1, CO2) is encrypted during the scrambling operation with a key (16) and wherein the descrambling operation comprises an additional step for decrypting said control object (CO1, CO2).

5. Method of claim 4, wherein said key (16) is unique for each control object (CO1, CO2) and is identified by a key identifier (K1, K2) which corresponds to the unique identifier ID of the control object (CO1, CO2) encrypted with this key (16).

6. Method of claim 5, wherein the keys (16) are organized in a hierarchical manner according to the level of degradation, so that the access to one of said keys (16) gives access to the keys (16) corresponding to a control object (CO1, CO2) of higher level of degradation.

7. Method of claim 6, wherein the key (16) of a level of degradation is obtained by a hash function of the key (16) related to the lower level of degradation.

8. Method of any of claims 1 to 7, wherein said coding format is JPEG compression format and said syntax element (12, 12', 13) are DC coefficients and/or AC coefficients or elements of a quantization table.

9. Method of any of claim 8, wherein the scrambling operation further comprises the steps of:
- calculating a compensated coefficient (12") for a compensated block (22) that follows each block where a DC coefficient (12) has been substituted in order to avoid any drift effect on DC coefficients (12) of the following blocks due to their dependence,
- substituting the original DC coefficient (12) of the compensated block (22), by said compensated coefficient (12"),
- storing the original DC coefficient (12) of the compensated block (22), together with its position, as additional original data (15) into one of said control objects (CO1, CO2).

10. Method of claim 9, wherein said compensated coefficient (12") is calculated on the basis of the difference between the luring coefficient (12') and the corresponding substituted DC coefficient (12).

11. Method of claims 9 or 10, wherein the DC coefficients (12) are coded according to a Variable Length Coding, the substitute step selects the length of the luring coefficient (12') as the same as the length of the substituted coefficient (12).

12. Method of any of claim 9 or 10, wherein the DC coefficients (12) are coded according to a Variable Length Coding, in case that the length of the compensated coefficient (12") is different than the length of the original coefficient (12) in a compensated block (22), the method comprises the steps of:
- extracting at least one AC coefficient (13) following the DC coefficient (12) to be compensate,
- determining at least a fake AC coefficient (13') so that the sum of the length of the original DC coefficient (12) and the original AC coefficient (13) is the same as the sum of the length of the compensated coefficient (12") and the fake AC coefficient (13') taking into account that the fake AC coefficient (13') is compatible with the coding format of the image (10, 20, 30).

13. System for scrambling an original image (10) into a scrambled image (20), comprising:
- a scrambler for scrambling an original image (10) into a scrambled image (20) by substituting a plurality of syntax elements (12, 13) by replacement syntax elements (12', 13') of the same nature, and forming at least two control objects (CO1, CO2), each control object (CO1, CO2) corresponding to a different degradation level of the original image (10) and comprising the substituted syntax elements (12, 13) with their respective positions within the image (10) as original data (15), each control object (CO1, CO2) being subject to different access conditions (25).

14. System (40) for descrambling a scrambled image (20) into a reconstructed image (30), said scrambled image (20) is associated with at least two control objects (CO1, CO2) corresponding to a different reconstruction level of the scrambled image (20), each comprising original data (15) formed by substituted syntax elements (12, 13) and their respective positions allowing to replace replacement syntax elements (12', 13') of the scrambled image (20), said system comprising a selection unit (42) to select at least one of the control objects (CO1, CO2) according to a user access condition (25) and a replacement unit (43) to replace the replacement syntax elements (12') in the scrambled image (20) by the substituted syntax elements (12, 13) extracted from the selected control object (CO1, CO2).

15. System (40) for descrambling a scrambled image (20) of claim 14, further comprising:
- an identification unit (44) to identify a user accessing the scrambled image (20) and,
- an access condition unit (45) to determine the user access conditions (25) of said identified user.
